# EUROPEAN PATENT SPECIFICATION

(11) **EP 2 790 858 B1**
(45) Date of publication and mention of the grant of the patent: **08.02.2017**
(21) Application number: 12798286.6
(22) Date of filing: 06.12.2012
(51) Int. Cl.: C22C 19/03, B22F 1/00, B22F 3/105, B22F 3/15, B22F 3/24, C22C 19/05, C22C 19/07, B32B 15/01, C23C 24/08, C23C 24/10

(54) **METHOD FOR ADDITIVELY MANUFACTURING AN ARTICLE MADE OF A DIFFICULT-TO-WELD MATERIAL**
VERFAHREN ZUR GENERATIVEN HERSTELLUNG EINES ARTIKELS AUS SCHWER ZU SCHWEISSENDEM MATERIAL
PROCÉDÉ DE FABRICATION ADDITIVE D'UN ARTICLE COMPOSÉ D'UN MATÉRIAU DIFFICILE À SOUDER

(30) Priority: 14.12.2011 CH 19802011
(43) Date of publication of application: 22.10.2014
(73) Proprietor: General Electric Technology GmbH, 5400 Baden (CH)
(72) Inventor: RICKENBACHER, Lukas Emanuel, CH-4053 Basel (CH); STANKOWSKI, Alexander, CH-5303 Würenlingen (CH); HOEVEL, Simone, CH-5426 Lengnau (CH); ETTER, Thomas, CH-5037 Muhen (CH)
(74) Representative: Bernotti, Andrea
(86) International application number: PCT/EP2012/074677
(87) International publication number: WO 2013/087515

(56) References cited:
- EP-A1- 1 396 556
- WO-A1-2004/007124
- WO-A1-2005/028690
- KELBASSA I ET AL: "Manufacture and repair of aero engine components using laser technology", 3RD PACIFIC INTERNATIONAL CONFERENCE ON APPLICATIONS OF LASERS AND OPTICS, PICALO : APRIL 16 - 18, 2008, CAPITAL HOTEL, BEIJING, CHINA ; SESSIONS FEATURING: PLENARY SESSION, LASER MATERIALS PROCESSING CONFERENCE, MICRO, NANO & ULTRAFAST FABRICATION C, 1 January 2008 (2008-01-01), pages 208-213, XP009161890, ISBN: 978-0-912035-89-5 cited in the application
- LIN X ET AL: "Laser rapid forming of SS316L/Rene88DT graded material", MATERIALS SCIENCE AND ENGINEERING A: STRUCTURAL MATERIALS:PROPERTIES, MICROSTRUCTURE & PROCESSING, LAUSANNE, CH, vol. 391, no. 1-2, 25 January 2005 (2005-01-25), pages 325-336, XP025303281, ISSN: 0921-5093, DOI: 10.1016/J.MSEA.2004.08.072 [retrieved on 2005-01-25]

## Description

### BACKGROUND OF THE INVENTION

The present invention relates to the technology of manufacturing thermally loaded components or parts, especially for gas turbines and the like. It refers to a method for additively manufacturing an article made of a difficult-to-weld material.

### PRIOR ART

In a common approach to process difficult-to-weld materials, e.g. by means of Selected Laser Melting (SLM), or the like, the powder bed is heated to an elevated temperature to reduce residual stresses resulting from the welding process (see for example documents US 6,215,093 B1, DE 101 04 732 C1, US 6,621,039 B2).

Beside this, the powder bed has to be cooled down to ambient temperature before the finished parts can be removed from the machine. But due to the low heat conductivity of powder beds, the heating up and cooling down of the powder bed requires a lot of time resulting in a significant decrease in productivity of the SLM process. Furthermore expensive heating equipment and isolation as well as adaptation of the process chamber are needed.

In the document: B. Geddes, H. Leon, X. Huang: Superalloys, Alloying and performance, ASM International, 2010, page 71-72, the authors describe a weldability line for super alloys approximately as two times Al concentration (wt.-%) + Ti concentration (wt. %) < 6.0, this means that Ni base super alloys with more than 6 wt.- % of [two times Al (wt. -%)+ Ti (wt. -%)] are defined as difficult to weld materials. Solidification and grain boundary liquation cracking occurs during the welding process, whereas post-weld heat treatments often lead to strain age cracking in gamma-prime Ni3(AI,Ti) precipitate strengthened alloys. Therefore, mainly solid-solution strengthened (e.g. IN625) or gamma-prime strengthened nickel-base super alloys with a low amount of Al and Ti (e.g. In718) can be processed by SLM up to the present day.

Further publications regarding the processing of Ni-base superalloys by means of SLM or EBM (Electron Beam Melting) or LMF (Laser Metal Forming) are:
1) Kelbassa, I., et al. Manufacture and repair of aero engine components using laser technology. in Proceedings of the 3rd Pacific International Conference on Application of Lasers and Optics. 2008.
2) Mumtaz, K. and N. Hopkinson, Top surface and side roughness of Inconel 625 parts processed using selective laser melting. Rapid Prototyping Journal, 2009. 15(2): p. 96 - 103.
3) Mumtaz, K. and N. Hopkinson, Laser melting functionally graded composition of Waspaloy® and Zirconia powders. Journal of Materials Science, 2007. 42(18): p. 7647-7656.
4) Mumtaz, K.A., P. Erasenthiran, and N. Hopkinson, High density selective laser melting of Waspaloy®. Journal of Materials Processing Technology, 2008. 195(1-3): p. 77-87.
5) Sehrt, J.T. and G. Witt, Entwicklung einer Verfahrenssystematik bei der Qualifizierung neuer Werkstoffe fur das Strahlschmelzverfahren. 2010.

Document WO2004/007124 A1 discloses blended powder solid-supersolidus liquid phase sintering. It relates to methods which involve blending a relatively fine metal powder with a relatively coarse pre-alloyed metal powder to produce a mixture that has a widened sintering temperature window compared to that of a relatively coarse pre-alloyed metal powder. Such a widened sintering temperature window can cause harmful segregation of the mixture and lower the weldability. This known dual material concept for Selective Laser Sintering (SLS) is used to achieve a finally dense body by additive manufacturing, where in a first step a strongly porous green body is manufactured, which, in a second step is freed from the binder and then sintered and/or infiltrated with a second alloy.

However, difficult-to-weld materials, such as the Ni-Co-based alloy Mar-M-247^{®} or Rene 80 can (today) only be processed with additive manufacturing technologies such as SLM with a high number of voids, cracks and pores (see Kelbassa, I., et al. Manufacture and repair of aero engine components using laser technology. in Proceedings of the 3rd Pacific International Conference on Application of Lasers and Optics. 2008., page 211). Post HTs (Heat Treatments) alone are not able to reach a sufficiently improved microstructure.

### SUMMARY OF THE INVENTION

It is therefore an object of the present invention to provide a method for additively manufacturing an article made of a difficult-to-weld material, especially of a highly-precipitation-strengthened Ni-base super alloy comprising more than 6 wt. -% [two times Al (wt. -%) + Ti (wt. -%)] or of a difficult-to weld carbide/solution-strengthened Co-base super alloy, which substantially reduces the number of voids, cracks and pores, resulting in improved mechanical properties, and can be easily put into practice.

This and other objects are obtained by a method according to claim 1.

The method according to the invention provides as a starting material a metal particle mixture by mixing at least a first phase or material and a second phase , said first phase of the mixture being a base material and said second phase of the mixture being a material which is a derivative of the base material and has relative to said base material an improved weldability and a lower melting point; this metal particle mixture is then processed by means of an additive manufacturing process, which is one of selective laser melting (SLM), , electron beam melting (EBM), laser metal forming (LMF), laser engineered net shape (LENS), or direct metal deposition (DMD).

Preferably said metal particle mixture is a metal powder.

According to another embodiment of the invention said metal particle mixture comprises a suspension.

According to another embodiment of the invention said first phase or base metal is a difficult-to-weld metal material that tends to crack formation.

Preferably, said first phase or base metal is one of a gamma-prime precipitation-hardened super alloy, such as a nickel (Ni)-base super alloy, or a carbide/solution-strengthened cobalt (Co)-base super alloy.

According to another embodiment of the invention said second phase, which is a derivative of said first phase, has a lower melting point than said first phase, and the percentage by weight of the second phase is between 1% and 70%.

Especially, the percentage by weight of the second phase is between 5% and 30%.

Preferably, said second phase comprises at least one melting-point-depressing constituent (MPD) to lower its melting point.

Especially, said at least one melting-point-depressing constituent is one of Boron (B), Hafnium (Hf) or Zirconium (Zr).

Alternatively or additionally, said second phase comprises nanometer-sized powder particles to lower its melting point.

Preferably, a percentage of micro particles of the second phase are pre-alloyed with said nanometer-sized powder particles.

Alternatively, said second phase consists of a percentage of mechanically mixed micro particles and nanometer-sized powder particles.

According to another embodiment of the invention said additive manufacturing process is conducted without pre-heating or pre-heating below 400°C said metal particle mixture.

According to just another embodiment of the invention said second phase has a higher ductility than said first phase. This leads to a higher stress and strain tolerance of the manufactured article.

According to another embodiment of the invention selective laser melting (SLM) is used as the additive manufacturing process, and the SLM parameters are set-up to melt said second phase only, thereby significantly reducing the heat input during build-up of the article and consequently reducing inherent stresses in the article body which could otherwise lead to crack formation and distortion during manufacturing.

According to just another embodiment of the invention the high-density of the article is further increased by means of a post heat treatment.

Preferably, said post heat treatment is applied, such that remaining, non-molten second metal phase particles, encapsulated in the mostly high-density article, fully melt during the post heat treatment, thereby filling the inner (closed) porosity.

According to another embodiment of the invention a final hot isostatic pressing (HIP) is carried out at a lower temperature compared to the heat treatment temperature of the material of the first phase.

According to just another embodiment of the invention the article to be manufactured is a gas turbine component or a part of a gas turbine component, which is to be joined with other parts by welding or brazing.

### BRIEF DESCRIPTION OF THE DRAWINGS

The present invention is now to be explained more closely by means of different embodiments and with reference to the attached drawings.
- Fig. 1: shows the main steps of a manufacturing process according to an embodiment of the invention;
- Fig. 2: shows a preferred SLM process, where powder layers of alternating thickness are used to build up the article;
- Fig. 3: shows the effect of adding increasing quantities of a brazing alloy powder according to the EP 1 689 897 B1 document to a Mar-M-247^{®} base alloy powder, to reduce the cracking tendency, whereby Figs. 3A-D refer to an addition of 0%, 10%, 20% and 30%, respectively;
- Fig. 4: shows the effect of reducing the cracking tendency by increasing the hatch of the laser beam scan, whereby Figs. 4A-C refer to a small, medium and large hatch, respectively; and
- Fig. 5 and 6: show pictures of a fine grained, anisotropic grain structure according to the invention in the x/y and y/z plane, respectively.

### DETAILED DESCRIPTION OF DIFFERENT EMBODIMENTS OF THE INVENTION

The disclosed principle of the invention should be generally used to modify superalloys, which were originally defined for (fine) casting to be suited for SLM processing.

To overcome the restrictions for SLM (using highly precipitation strengthened alloys), a two-phase powder mixture concept is proposed, including properly tailored post heat treatments.

According to the invention, a method to additively manufacture articles) out of difficult-to-weld highly-precipitation-strengthened Ni-base super alloy comprising more than 6 wt. -% of [two times Al (wt. -%) + Ti (wt. -%)] or a difficult-to weld carbide/solution-strengthened cobalt (Co)-base super alloy is proposed, using as a starting material a metal particle mixture by mixing at least a first phase or material and a second phase, said first phase of the mixture being a base material and said second phase of the mixture being a material which is a derivative of the base material and has relative to said base material an improved weldability and a lower melting point; this metal particle mixture is then processed by means of an additive manufacturing process, which is one of selective laser melting (SLM), electron beam melting (EBM), laser metal forming (LMF), laser engineered net shape (LENS), or direct metal deposition (DMD).

This approach stands in clear contrast to the already known practice of selective laser sintering (SLS), where also a dual material concept is used to achieve a finally dense body by additive manufacturing, and where in a first step a strongly porous green body is manufactured, which, in a second step is freed from the binder and then sintered and/or infiltrated with a second alloy (see WO 2004/007124 A1).

The proposed powder-based additive manufacturing technology is used to build up a metal article entirely or partly, especially for gas turbine applications, e.g. a blade crown, leading edge, blade, etc..

Said additive manufacturing technology uses either a metal powder as the material. However, the additive manufacturing technology may alternatively use a suspension instead of a powder.

The first material or phase, i.e. the base metal, is preferably a difficult-to-weld metal material that tends to show crack formation, e.g. gamma-prime precipitation-hardened super alloys such as nickel (Ni)-base super alloys or carbide/solution-strengthened cobalt (Co)-base super alloys.

The second metal phase (or braze alloy), which is a derivative of the first metal phase, has a lower melting point than the first metal phase - whereby the percentage by weight of the second metal phase is generally between 1% and 70%, or more specifically between 5% and 30%.

To improve the weldability, the second metal phase may comprise one or more melting-point-depressing constituent(s) (MPDs). Such melting-point-depressing constituents include preferably Boron (B), Hafnium (Hf), Zirconium (Zr), etc.. The melting point depressants enhance the mechanical properties by stabilizing the (high number of) grain boundaries due to precipitate formation. Especially, the LCF and creep properties can be enhanced by formation of borides, carbides, carboborides etc. along the grain boundaries.

Alternatively or additionally, the weldability may be improved by the second metal phase comprising nanometer-sized powder particles to lower the melting point.

A percentage of the micro powder particles can be pre-alloyed with nanometer-sized powder particles, or the metal powder consists of a percentage of mechanically mixed micro and nanometer-sized powder particles.

As a result, less energy is required for melting the two-phase metal powder mixture that leads to a minimized heat affected zone, less inherent stresses and reduced propensity for crack formation and geometry deviation due to distortion during build-up of the article.

Preferably, no pre-heating of the powder bed is used within the process.

At least, the pre-heating of the powder bed will be below 400°C.

Furthermore, no pre-heating or remelting of the metal article by a second laser source or subsequent laser remelting is required during the additive manufacturing process.

One of several advantages is that the second metal phase has a higher ductility allowing absorbing stresses resulting from the welding process, which lead to a lower crack formation.

Another advantage is that a mostly high-density article body is manufactured by said powder-based additive manufacturing technology.

The SLM parameters can be set-up such that only the second phase melts. This leads to a significant reduction of heat input during build-up of the article and consequently reduces inherent stresses in the body, which can otherwise lead to crack formation and distortion during manufacturing.

In order to reach an optimum density of the metal powder within the powder bed of the SLM equipment, it is preferred to use a powder mix which also includes the fine fraction from original powder production. It is important that the ratio of fine fraction vs. coarse fraction (without considering the potential additional amount of nano particle) is defined as best suited balance to increase the overall powder density while keeping sufficient good powder flowability.

The high-density of the body can further be increased with a post heat treatment. During the post heat treatment, remaining, non-molten second metal phase powder particles, encapsulated in the mostly high-density body, fully melt, filling the inner (closed) porosity of the body. Furthermore, the microstructure of the article can be adjusted/tailored according to the intended service demand/exposure (e.g. oxidation, erosion, LCF) by post heat treatment (HT).

Also, a final hot isostatic pressing step (HIP) can be carried out at lower temperatures compared to the heat treatment temperatures for the original super alloy (first phase). This is very beneficial in order to keep the geometry of the manufactured article.

In order to achieve an optimum re-densification over the total cross section of the body, the surface of the body may be carefully blasted or polished and nickel-plated prior to the heat treatment. This leads to a sealing of surface-related defects, which can therefore also closed during heat treatment.

The improved mechanical properties and microstructure of correspondingly manufactured parts also support subsequent joining processes, such as welding and brazing. This is of special importance if corresponding parts are intended to be used for the manufacturing of hybrid/modularly build gas turbine (GT) components.

Furthermore, the oxidation resistance of the material can be increased by adding the second phase (derivative of first phase with modified chemistry to reach improved oxidation lifetime).

Finally, the hatch of the laser beam scan can be optimized with regard to hatch size and rotation angle (< 90°) and the reciprocating movement of the laser focus.

### Embodiment:

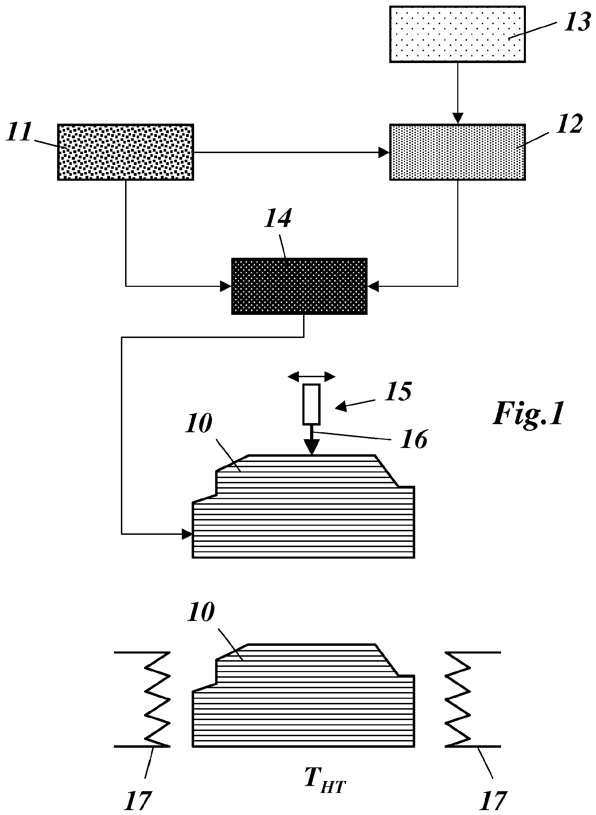

Fig. 1 shows the main steps of a manufacturing process according to an embodiment of the invention. The process starts with a first phase 11 of metal powder material. A part of this first phase 11 is mixed with an MPD constituent 13 to give a second phase 12 of metal powder material, which is a derivative of the first phase 11.

The first phase 11 in the second phase 12 are now mixed to give the metal particle powder mixture 14, which is used as the starting material for the selective laser melting step. Within this SLM step an article 10 is formed by successively melting layers of the powder mixture 14 by means of a laser melting device 15, the laser beam 16 of which impinges on the surface of an upper powder layer.

The final article 10 is then heat treated, e.g. by using heaters 17, at a heat treatment temperature T_{HT}.

As the inevitable volume shrinkage during melting/solidifying of a metal powder in the SLM process is the main reason for stress within the article, this volume shrinkage should be kept as low as possible. This can be achieved by increasing or maximizing the powder density within the SLM process space. The powder density may be increased by using a powder, which contains a sufficient fraction of very fine powder. However, it has to be considered that it is essential for the SLM process to optimize at the same time the density and the flowability of the powder.

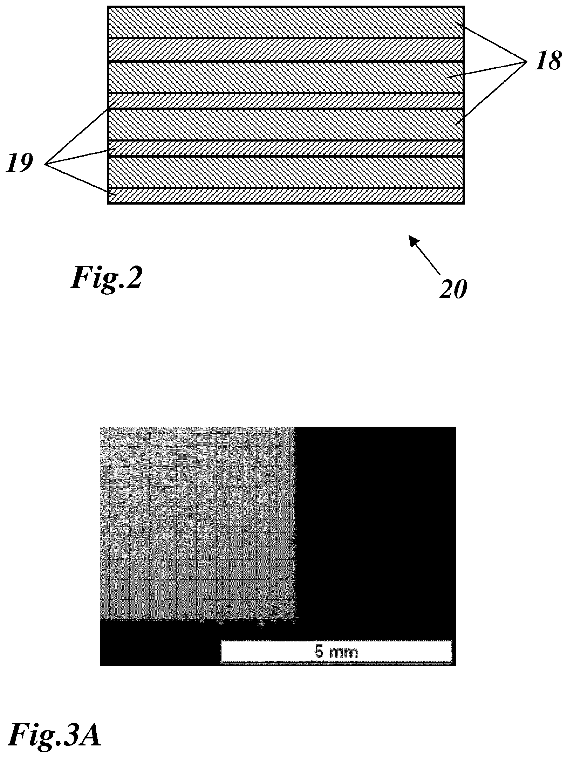

Tests with the inventive method have shown that an article with substantially less defects can be manufactured using very thin layers of powder during SLM processing. On the other hand, it is very cumbersome to build a larger article by using only such thin powder layers. To have a commercially successful process, it will be advantageous to use alternating powder layers 18 and 19 of different thickness, as shown for an article 20 in Fig. 2. The thin layers 19 allow for a closing of defects, which may appear in the thick layers 18. This guaranties, that defects do not propagate through the sequence of layers 18, 19.

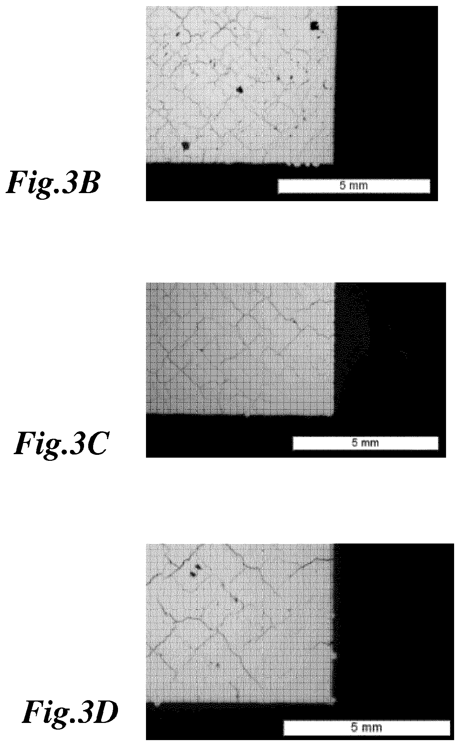

Fig. 3 shows the effect of adding an increasing amount of a brazing alloy powder of a kind, which has been disclosed in document EP 1 689 897 B1, to a Mar-M-247^{®} or MM247 base alloy powder, on the cracking tendency. In Fig. 3A, there is no brazing alloy powder added (0%); in Fig. 3B, 10% of the brazing alloy powder are added; in Fig. 3C and D, 20% and 30% are added, respectively. Fig. 3A-D show that with increasing percentage of braze alloy the crack-free areas of the body or component increase in size. A final re-densification by means of a HIP heat treatment will, due to the lower melting braze alloy fraction, lead to a substantial reduction of cracks or defects, in general.

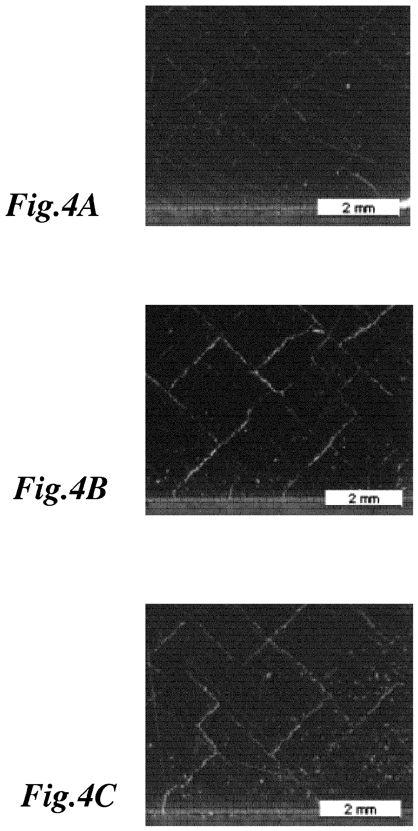

The influence of the parameters (e.g. hatch) of the laser beam scan on the size of the crack-free areas is shown in Fig. 4A-C. In Fig. 4A-C the hatch increases from small (a) to medium (B) and large (C). It can be seen, that the size of the crack-free areas increases accordingly.

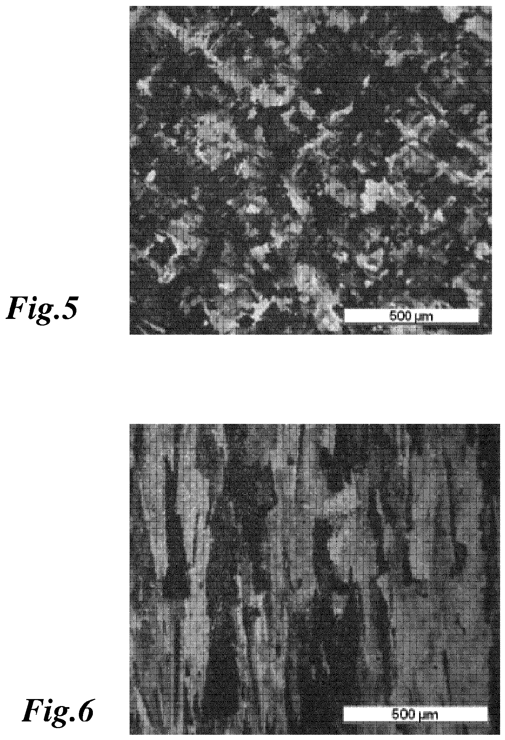

With the method according to the invention a fine-grained, anisotropic grain structure can be achieved within the body or component to be manufactured. An example of this is pictured in Fig. 5 and 6 with Fig. 5 showing the structure in an x/y plane, while Fig. 6 relates to the y/z plane.

### Advantages of the inventive method:

- Dense and crack free parts made of difficult to weld material can be manufactured.
- No heating-up of the process chamber is required, therefore productivity is significantly increased.
- Melting-point-depressing constituents improve material properties, e.g. by pinning grain boundaries with borides and other typical precipitates.
- Small grain size resulting from the additive manufacturing technology leads to an improved LCF behavior, compared to conventionally cast material.
- Based on specifically defined post heat treatments, LCF and creep behavior can be tailored according to the need of the intended part loading. This is of special importance for the build-up of modular/hybrid gas turbine components.

### Application of the inventive method:

- In cases where difficult-to-weld materials are used, e.g. Industrial Gas Turbine, Aero Gas Turbine etc.
- With increasing firing temperatures the tendency towards alloys with increased high-temperature strength (reached by high volume of gamma prime precipitation) leads to an increasing amount of difficult-to-weld materials in the design of hot gas path parts of gas turbines.

### LIST OF REFERENCE NUMERALS

- 10,20: article
- 11: first phase
- 12: second phase
- 13: MPD constituent
- 14: metal particle mixture
- 15: laser melting device
- 16: laser beam
- 17: heater
- 18,19: powder layer

## Claims

1. Method for additively manufacturing an article (10, 20) made of a difficult-to-weld highly-precipitation-strengthened Ni-base super alloy comprising more than 6 wt. -% [two times Al (wt. -%) + Ti (wt. -%)] or made of a difficult-to weld carbide/solution-strengthened Co-base super alloy, whereby a metal particle mixture (14) is provided as a starting material by mixing at least a first phase or material (11) and a second phase (12), said first phase of the mixture being a base material and said second phase of the mixture being a material which is a derivative of the base material and has relative to said base material an improved weldability and a lower melting point, and whereby said metal particle mixture (14) is processed by means of an additive manufacturing process which is one of selective laser melting (SLM), electron beam melting (EBM), laser metal forming (LMF), laser engineered net shape (LENS), or direct metal deposition (DMD).

2. The method according to claim 1, **characterized in that** said metal particle mixture (14) is a metal powder.

3. The method according to claim 1, **characterized in that** said metal particle mixture (14) comprises a suspension.

4. The method according to one of the claims 1 to 3, **characterized in that** said first phase or base metal is a difficult-to-weld metal material that tends to crack formation.

5. The method according to claim 4, **characterized in that** said first phase or base metal is one of a gamma-prime precipitation-hardened super alloy, such as a nickel (Ni)-base super alloy, or a carbide/solution-strengthened cobalt (Co)-base super alloy.

6. The method according to one of the claims 1 to 5, **characterized in that** said second phase, which is a derivative of said first phase, has a lower melting point than said first phase, and the percentage by weight of the second phase is between 1% and 70%.

7. The method according to claim 6, **characterized in that** the percentage by weight of the second phase is between 5% and 30%.

8. The method according to claim 6 or 7, **characterized in that** said second phase comprises at least one melting-point-depressing constituent (13) to lower its melting point.

9. The method according to claim 8, **characterized in that** said at least one melting-point-depressing constituent (13) is one of Boron (B), Hafnium (Hf) or Zirconium (Zr).

10. The method according to claim 6 or 7, **characterized in that** said second phase comprises nanometer-sized powder particles to lower its melting point.

11. The method according to claim 10, **characterized in that** a percentage of micro particles of the second phase are pre-alloyed with said nanometer-sized powder particles.

12. The method according to claim 10, **characterized in that** said second phase consists of a percentage of mechanically mixed micro particles and nanometer-sized powder particles.

13. The method according to one of the claims 1-12, **characterized in that** said additive manufacturing process is conducted without pre-heating or pre-heating below 400°C said metal particle mixture.

14. The method according to one of the claims 1-13, **characterized in that** said second phase has a higher ductility than said first phase, allowing to absorb stresses resulting from the welding process, which leads to a lower crack formation.

15. The method according to one of the claims 1-14, **characterized in that** selective laser melting (SLM) is used as the additive manufacturing process, and the SLM parameters are set-up to melt said second phase only, thereby significantly reducing the heat input during build-up of the article and consequently reducing inherent stresses in the article body which could otherwise lead to crack formation and distortion during manufacturing.

16. The method according to one of the claims 1-15, **characterized in that** the high-density of the article is further increased by means of a post heat treatment (T_{HT}).

17. The method according to claim 16, **characterized in that** said post heat treatment is applied, such that remaining, non-molten second metal phase particles, encapsulated in the mostly high-density article, fully melt during the post heat treatment, thereby filling the inner (closed) porosity.

18. The method according to one of the claims 1-17, **characterized in that** a final hot isostatic pressing (HIP) is carried out at a lower temperature compared to the heat treatment temperature of the material of the first phase.

19. The method according to one of the claims 1-18, **characterized in that** the article to be manufactured is a gas turbine component, or a part of a gas turbine component, which is to be joined with other parts by welding or brazing.

## Patentansprüche

1. Verfahren zur additiven Herstellung eines Gegenstands (10, 20), der aus einer schwer zu schweißenden, hoch ausscheidungsverfestigten Superlegierung auf Ni-Basis hergestellt ist, welche mehr als 6 Gew.-% [zweifach Al (Gew.-%) + Ti (Gew.-%)] enthält, oder aus einer schwer zu schweißenden Hartmetall/mischkristallverfestigten Superlegierung auf Co-Basis hergestellt ist, wobei eine Metallpartikelmischung (14) als Ausgangsmaterial bereitgestellt wird, indem mindestens eine erste Phase oder ein erstes Material (11) und eine zweite Phase (12) gemischt werden, wobei die erste Phase der Mischung ein Basismaterial ist und die zweite Phase der Mischung ein Material ist, welches ein Derivat des Basismaterials ist und relativ zu dem Basismaterial eine verbesserte Schweißbarkeit und einen niedrigeren Schmelzpunkt hat, und wobei die Metallpartikelmischung (14) mittels eines additiven Herstellungsverfahren verarbeitet wird, bei dem es sich um eines der Verfahren selektives Laserschmelzen (SLM), Elektronenstrahlschmelzen (EBM), Laserauftragschweißen (LMF), Laser Engineered Net Shaping (LENS) oder Direct Metal Deposition (DMD) handelt.

2. Verfahren nach Anspruch 1, **dadurch gekennzeichnet, dass** die Metallpartikelmischung (14) ein Metallpulver ist.

3. Verfahren nach Anspruch 1, **dadurch gekennzeichnet, dass** die Metallpartikelmischung (14) eine Suspension umfasst.

4. Verfahren nach einem der Ansprüche 1 bis 3, **dadurch gekennzeichnet, dass** die erste Phase oder das Basismetall ein schwer zu schweißendes Metallmaterial ist, das zur Rissbildung neigt.

5. Verfahren nach Anspruch 4, **dadurch gekennzeichnet, dass** die erste Phase oder das Basismetall entweder eine gamma-prime ausscheidungsgehärtete Superlegierung, wie etwa eine Superlegierung auf Nickel-(Ni)-Basis, oder eine Hartmetall/mischkristallverfestigte Superlegierung auf Co-Basis ist.

6. Verfahren nach einem der Ansprüche 1 bis 5, **dadurch gekennzeichnet, dass** die zweite Phase, die ein Derivat der ersten Phase ist, einen niedrigeren Schmelzpunkt als die erste Phase hat und der Gewichtsprozentsatz der zweiten Phase zwischen 1 % und 70 % liegt.

7. Verfahren nach Anspruch 6, **dadurch gekennzeichnet, dass** der Gewichtsprozentsatz der zweiten Phase zwischen 5 % und 30 % liegt.

8. Verfahren nach Anspruch 6 oder 7, **dadurch gekennzeichnet, dass** die zweite Phase mindestens einen den Schmelzpunkt herabsetzenden Bestandteil (13) zur Senkung ihres Schmelzpunkts aufweist.

9. Verfahren nach Anspruch 8, **dadurch gekennzeichnet, dass** der mindestens eine den Schmelzpunkt herabsetzende Bestandteil (13) entweder Bor (B), Hafnium (Hf) oder Zirkonium (Zr) ist.

10. Verfahren nach Anspruch 6 oder 7, **dadurch gekennzeichnet, dass** die zweite Phase Pulverpartikel in Nanometergröße zur Senkung ihres Schmelzpunktes aufweist.

11. Verfahren nach Anspruch 10, **dadurch gekennzeichnet, dass** ein Prozentsatz von Mikropartikeln der zweiten Phase mit den Pulverpartikeln in Nanometergröße vorlegiert ist.

12. Verfahren nach Anspruch 10, **dadurch gekennzeichnet, dass** die zweite Phase aus einem Prozentsatz von mechanisch gemischten Mikropartikeln und Pulverpartikeln in Nanometergröße besteht.

13. Verfahren nach einem der Ansprüche 1 bis 12, **dadurch gekennzeichnet, dass** der additive Herstellungsprozess ohne Vorwärmung oder Vorwärmung der Metallpartikelmischung unter 400 °C durchgeführt wird.

14. Verfahren nach einem der Ansprüche 1 bis 13, **dadurch gekennzeichnet, dass** die zweite Phase eine höhere Duktilität als die erste Phase hat, was die Absorption von aus dem Schweißprozess resultierenden Belastungen erlaubt, was zu einer geringeren Rissbildung führt.

15. Verfahren nach einem der Ansprüche 1 bis 14, **dadurch gekennzeichnet, dass** selektives Laserschmelzen (SLM) als der additive Herstellungsprozess verwendet wird und die SLM-Parameter so eingestellt sind, dass nur die zweite Phase geschmolzen wird, wodurch die Wärmezuführung während des Aufbaus des Gegenstands signifikant reduziert wird und folglich inhärente Belastungen in dem Gegenstandskörper reduziert werden, die ansonsten zur Rissbildung und Verwindung während der Herstellung führen.

16. Verfahren nach einem der Ansprüche 1 bis 15, **dadurch gekennzeichnet, dass** die hohe Dichte des Gegenstands durch eine Wärmenachbehandlung (T_{HT}) weiter gesteigert wird.

17. Verfahren nach Anspruch 16, **dadurch gekennzeichnet, dass** die Wärmenachbehandlung angewandt wird, so dass verbleibende nicht geschmolzene Partikel der zweiten Metallphase, die in dem Gegenstand mit weitgehend hoher Dichte verkapselt sind, während der Wärmenachbehandlung vollständig schmelzen und dadurch eine innere (geschlossene) Porosität füllen.

18. Verfahren nach einem der Ansprüche 1 bis 17, **dadurch gekennzeichnet, dass** ein abschließendes heißisostatisches Pressen (HIP) bei einer niedrigeren Temperatur im Vergleich zu der Wärmebehandlungstemperatur des Materials der ersten Phase durchgeführt wird.

19. Verfahren nach einem der Ansprüche 1 bis 18, **dadurch gekennzeichnet, dass** der herzustellende Gegenstand ein Gasturbinenbauteil oder ein Teil eines Gasturbinenbauteils ist, welches mit anderen Teilen durch Schweißen oder Hartlöten verbunden werden soll.

## Revendications

1. Procédé de fabrication additive d'un article (10, 20) composé d'un superalliage à base de Ni, hautement renforcé par précipitation, difficile à souder, comprenant plus de 6 % en poids [deux fois Al (% en poids) + Ti (% en poids)] ou composé d'un superalliage à base de Co, renforcé par du carbure/une solution, difficile à souder, moyennant quoi un mélange de particules métalliques (14) est apporté sous la forme d'un produit de départ en mélangeant au moins une première phase ou matériau (11) et une seconde phase (12), ladite première phase du mélange étant un matériau de base et ladite seconde phase du mélange étant un matériau qui est un dérivé du matériau de base et qui a par rapport audit matériau de base une soudabilité améliorée et un point de fusion inférieur, et moyennant quoi ledit mélange de particules métalliques (14) est traité à l'aide d'un procédé de fabrication additive qui est l'un de la fusion laser sélective (SLM), de la fusion par faisceau d'électrons (EBM), du formage de métaux au laser (LMF), de la finition immédiate au laser (LENS) ou du dépôt direct de métaux (DMD).

2. Procédé selon la revendication 1, **caractérisé en ce que** ledit mélange de particules métalliques (14) est une poudre métallique.

3. Procédé selon la revendication 1, **caractérisé en ce que** ledit mélange de particules métalliques (14) comprend une suspension.

4. Procédé selon l'une quelconque des revendications 1 à 3, **caractérisé en ce que** ladite première phase ou métal de base est un matériau métallique difficile à souder qui tend à fissurer.

5. Procédé selon la revendication 4, **caractérisé en ce que** ladite première phase ou métal de base est l'un d'un superalliage durci par précipitation à base de gamma prime, tel qu'un superalliage à base de nickel (Ni), ou d'un superalliage à base de cobalt (Co) renforcé par du carbure/une solution.

6. Procédé selon l'une quelconque des revendications 1 à 5, **caractérisé en ce que** ladite seconde phase, qui est un dérivé de ladite première phase, a un point de fusion inférieur à ladite première phase, et le pourcentage en poids de la seconde phase est situé entre 1 % et 70 %.

7. Procédé selon la revendication 6, **caractérisé en ce que** le pourcentage en poids de la seconde phase est situé entre 5 % et 30 %.

8. Procédé selon la revendication 6 ou 7, **caractérisé en ce que** ladite seconde phase comprend au moins un constituant abaissant le point de fusion (13) pour abaisser son point de fusion.

9. Procédé selon la revendication 8, **caractérisé en ce que** ledit au moins un constituant abaissant le point de fusion (13) est l'un du bore (B), de l'hafnium (Hf) ou du zirconium (Zr).

10. Procédé selon la revendication 6 ou 7, **caractérisé en ce que** ladite seconde phase comprend des particules de poudre de taille nanométrique pour abaisser son point de fusion.

11. Procédé selon la revendication 10, **caractérisé en ce qu'**un pourcentage de microparticules de la seconde phase sont pré-alliées avec lesdites particules de poudre de taille nanométrique.

12. Procédé selon la revendication 10, **caractérisé en ce que** ladite seconde phase est constituée d'un pourcentage de microparticules mélangées mécaniquement et de particules de poudre de taille nanométrique.

13. Procédé selon l'une quelconque des revendications 1 à 12, **caractérisé en ce que** ledit procédé de fabrication additive est réalisé sans préchauffage ou en préchauffant en-dessous de 400 °C ledit mélange de particules métalliques.

14. Procédé selon l'une quelconque des revendications 1 à 13, **caractérisé en ce que** ladite seconde phase a une ductilité supérieure à ladite première phase, ce qui permet d'absorber les contraintes résultant du procédé de soudage, ce qui conduit à une fissuration inférieure.

15. Procédé selon l'une quelconque des revendications 1 à 14, **caractérisé en ce qu'**une fusion laser sélective (SLM) est utilisée en tant que procédé de fabrication additive, et **en ce que** les paramètres de la SLM sont fixés de manière à n'entraîner la fusion que de ladite seconde phase, en réduisant ainsi sensiblement l'apport de chaleur au cours de la fabrication de l'article et en conséquence en réduisant les contraintes inhérentes dans le corps de l'article qui pourraient sinon conduire à une fissuration et à une distorsion au cours de la fabrication.

16. Procédé selon l'une quelconque des revendications 1 à 15, **caractérisé en ce que** la densité élevée de l'article est en outre augmentée à l'aide d'un traitement thermique complémentaire (T_{HT}).

17. Procédé selon la revendication 16, **caractérisé en ce que** ledit traitement thermique complémentaire est appliqué, tel que les particules métalliques résiduelles, non fondues, de la seconde phase, encapsulées dans l'article principalement haute densité, fondent totalement au cours du traitement thermique complémentaire, en remplissant ainsi la porosité interne (fermée).

18. Procédé selon l'une quelconque des revendications 1 à 17, **caractérisé en ce qu'**un pressage isostatique à chaud (HIP) final est réalisé à une température inférieure en comparaison avec la température de traitement thermique du matériau de la première phase.

19. Procédé selon l'une quelconque des revendications 1 à 18, **caractérisé en ce que** l'article à fabriquer est un composant de turbine à gaz, ou une partie d'un composant de turbine à gaz, qui doit être relié à d'autres pièces par soudage ou brasage.
